Europäisches Patentamt

European Patent Office

Office européen des brevets

(19)

(11) Veröffentlichungsnummer: **0 078 919**

**A1**

(12) # EUROPÄISCHE PATENTANMELDUNG

(21) Anmeldenummer: 82109267.3

(22) Anmeldetag: 07.10.82

(51) Int. Cl.³: **C 02 F 3/28**

(30) Priorität: 06.11.81 DE 3144111

(43) Veröffentlichungstag der Anmeldung:
18.05.83 Patentblatt 83/20

(84) Benannte Vertragsstaaten:
AT BE CH FR GB IT LI LU NL SE

(71) Anmelder: KLÖCKNER-WERKE Aktiengesellschaft
Klöcknerstrasse 29
D-4100 Duisburg 1(DE)

(72) Erfinder: Moraw, Walter
Zur Steinbreede 46
D-4504 Georgsmarienhütte(DE)

(54) **Verfahren und Vorrichtung zur Behandlung von Klärschlamm.**

(57) Bei der Behandlung von Klärschlamm erfordert der Faulprozeß etwa eine Zeit von 20 bis 24 Tagen. Um diese Zeit wesentlich reduzieren zu können, wird die Gärung des Klärschlamms in zwei Stufen durchgeführt, wobei die erste Stufe eine thermophile und die zweite Stufe eine mesophile Gärung ist und der Klärschlamm jeweils gut durchgemischt wird. Dabei beträgt die Verweilzeit des Klärschlamms in der ersten Stufe etwa 12 bis 24 Stunden und in der zweiten Stufe 8 bis 10 Tage, so daß die bisher erforderliche Zeit für den Faulprozeß auf die Hälfte und weniger reduziert werden kann. Sowohl die erste als auch die zweite Stufe der Gärung finden in einem sogenannten Schlaufenbehälter (9,18) statt, welche stehend oder liegend angeordnet sind und im Eintrittsbereich jeweils mittig ein Axialrad (13,19) haben, welches den eintretenden Schlamm durchmischt und ihm eine axiale Geschwindigkeitskomponente aufzwingt. Mit dieser Geschwindigkeitskomponente wird der Schlamm dann durch den jeweiligen Schlaufenbehälter (9,18) zwangsgeführt.

EP 0 078 919 A1

## Verfahren und Vorrichtung zur Behandlung von Klärschlamm

Die Erfindung bezieht sich auf ein Verfahren und eine Vorrichtung zum Behandeln von Klärschlamm, wobei der Rohschlamm pasteurisiert/einem Faulprozeß unterworfen wird.
und

Aus der DE-AS 24 10 323 ist ein Verfahren zum Pasteurisieren von Klärschlamm bekannt, wobei die Voraussetzungen für das Pasteurisieren des Klärschlamms, nämlich ein Halten des Schlamms auf einer Temperatur von mindestens 65 °C während einer Zeit von mindestens 30 Minuten, dadurch geschaffen werden, daß drei Kammern vorhanden sind, die die Verweilzeit für die Durchführung des Pasteurisierungsvorganges bilden, wobei diese drei Kammern zyklisch folgende Vorgänge durchführen: Füllen, Verweilen, Entleeren. Dadurch, daß immer eine Kammer gefüllt und eine andere Kammer entleert wird, kann der ankommende Schlamm kontinuierlich abgenommen und pasteurisierter Schlamm kontinuierlich weiterbefördert werden.

Dieses Verfahren hat sich in der Praxis bewährt. Der dabei im Anschluß an den Pasteurisierungsprozeß stattfindende Faulprozeß, der bei einer niedrigeren Temperatur durchgeführt wird, erfordert dann jedoch noch eine Zeit von 20 bis 24 Tagen.

Hier setzt die Erfindung ein, und ihr liegt die Aufgabe zugrunde, ein Verfahren anzugeben, welches eine wesentliche Reduzierung der Faulzeit des Klärschlammes ermöglicht.

Die Lösung dieser Aufgabe ist im Kennzeichnungsteil des Anspruches 1 angegeben.

Der Begriff "überwiegend saure Gärung" bedeutet, daß in dieser Gärungsphase auch noch Laugenbildner verbleiben, "überwiegend" jedoch auf jeden Fall Säurebildner vorhanden sind. Analoges gilt für den Begriff "überwiegend alkalische Gärung". Da im Substrat der überwiegend sauren Gärung auch noch Laugenbildner verbleiben, kann dann im Anschluß an die überwiegend saure Gärung trotz der bei dieser Gärung verwendeten höheren Temperatur danach dann auch noch die überwiegend alkalische Gärung bei niedrigerer Temperatur stattfinden, ohne eine zusätzliche Impfung des Klärschlamms mit Laugenbildnern vornehmen zu müssen.

Bevorzugte Ausführungsformen des verfahrensmäßigen Erfindungsgedankens befinden sich in den zugehörigen Unteransprüchen.

Außerdem liegt der Erfindung die Aufgabe zugrunde, auch eine Vorrichtung anzugeben, mit der die Faulzeit des Klärschlammes wesentlich reduziert werden kann.

Die Lösung dieser Aufgabe befindet sich im Kennzeichnungsteil des ersten Vorrichtungsanspruches.

Bevorzugte Ausführungsformen dieses vorrichtungsmäßigen Erfindungsgedankens ergeben sich dann aus den hierzu gehörigen Unteransprüchen.

Die Erfindung weist insbesondere den Vorteil auf, daß durch die Aufteilung der Gärung in zwei Stufen die Faulzeit des Schlammes von bisher ca. 20 bis 24 Tagen auf 8 bis 10 Tage, zum Teil sogar noch weniger und damit auf weniger als die Hälfte reduziert werden kann. Dieser Vorteil ist darauf zurückzuführen, daß die erste, also die thermophile Faulstufe, die mit Temperaturen oberhalb 45 °C durchgeführt wird, mit der Pasteurisierung des Klärschlamms gleichzeitig stattfindet, so daß sich daran dann nur noch die zweite Faulstufe, also die mesophile Stufe, mit Temperaturen zwischen 20 und 45 °C anschließt, und die Trennung des Faulprozesses zu zwei unterschiedlichen, leistungsfähigen, dominaten Bakterienstämmen führt, die in Verbindung mit den Betriebstemperaturen und der guten Durchmischung des Schlammes die Faulzeit erheblich reduzieren.

Ein weiterer wesentlicher Vorteil des Verfahrens besteht
darin, daß der so behandelte Klärschlamm wegen der kombinierten thermischen Behandlung mit einer ausreichenden Verweilzeit entsprechend den geltenden Rechtsvorschriften uneingeschränkt im Landbau verwendbar ist.

Außerdem liegt auch noch ein Vorteil des Verfahrens darin,
daß es vollkontinuierlich abläuft. Das ist darauf zurückzuführen, daß die Strömungsgeschwindigkeit in den einzelnen
Schlaufenbehältern durch Querschnittserweiterungen so verringert wird, daß die für die gewünschten Prozesse erforderliche
Zeit mit Sicherheit erreicht wird, zumal in die Verweilzeit
auch noch die Verweilzeiten des Klärschlamms in den jeweiligen Rohrleitungen mit einzubeziehen sind.Für die erste Gärungs-stufe/
ist dabei praktisch die Verweilzeit zwischen den beiden Wärmetauschern und für die zweite Gärungsstufe die Verweilzeit hinter
dem zweiten Wärmetauscher zu berücksichtigen.

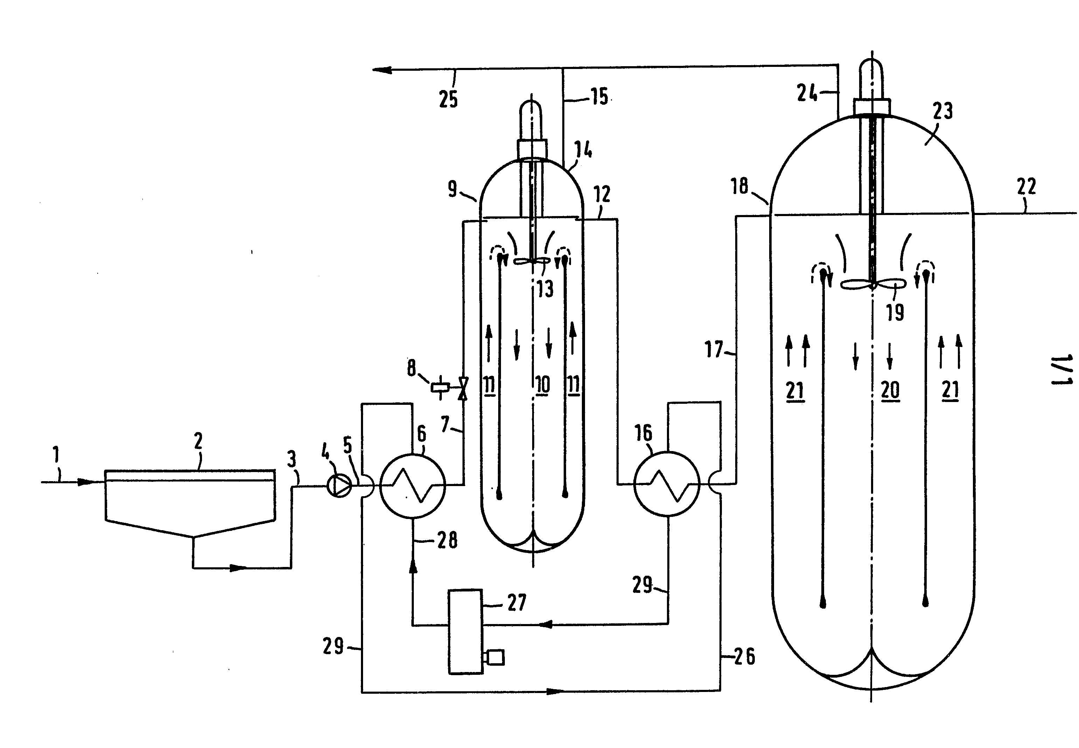

Eine bevorzugte Ausführungsform des Erfindungsgedankens ist
anhand des in der Zeichnung dargestellten Ausführungsbeispiels
mit einer stehenden Anordnung im einzelnen näher erläutert.

Klärschlamm ist im allgemeinen im wesentlichen neutral. Fallen
jedoch die fäulnisfähigen Stoffe durch die Tätigkeit anaerober Bakterien der Zersetzung anheim, sinkt der ph-Wert
durch die Bildung organischer Säuren schnell auf 6 oder 5 ab.
Diese saure Gärung vollzieht sich unter starker Geruchsentwicklung.

Mit steigendem ph-Wert geht der Schlamm dann in eine alkalische
Gärung über, wobei sich Kohlensäure und Methan (Faulgas) entwickeln. Deshalb wird diese Gärung auch als Methangärung bezeichnet. Dieser Gärprozeß vollzieht sich bei einem ph-Wert
von 7 bis 7,4.

Gemäß der Zeichnung gelangt der Roh- oder Frischschlamm, der einen sehr hohen Wassergehalt von teilweise mehr als 95 % hat, durch die Rohrleitung 1 zunächst in den Voreindicker 2, um den Wassergehalt zu reduzieren. Über die Rohschlammleitung 3 kommt der voreingedickte Schlamm dann durch die Pumpe 4 und die Leitung 5 in den Wärmetauscher 6, wo der Rohschlamm auf 55-70 $^{\circ}$C erhitzt wird.

Falls der Klärschlamm eine Temperatur von ca. 62-65 $^{\circ}$C erreicht und dabei mindestens 30 min gehalten wird, ist bereits eine vollständige Entseuchung erzielt.

Insbesondere aus Gründen eines möglichst wirtschaftlichen Energieaufwandes kann es jedoch zweckmäßig sein, die erste Gärungsstufe mit einer niedrigeren Temperatur, z.B. ab 55 $^{\circ}$C, zu fahren. Auch bei diesen Temperaturen findet dann eine sichere Entseuchung statt, wenn der Klärschlamm lange genug auf dieser Temperatur gehalten wird. Das ist bei einer durchschnittlichen Verweilzeit im ersten Schlaufenreaktor 9 von 12-24 Stunden auf jeden Fall gegeben. Außerdem ist hierbei auch noch zu berücksichtigen, daß diese Temperatur ja auch nicht nur im eigentlichen Schlaufenreaktor 9, sondern während der gesamten Verweilzeit des Klärschlamms zwischen den beiden Wärmetauschern 6,16 auf den Schlamm einwirkt, so daß die gewünschte Pasteurisierungsphase mit Sicherheit in der ersten Gärungsstufe immer durchlaufen wird. Diese Sicherheit ist durch die Zwangsführung des Klärschlammes gegeben. Im Schlaufenreaktor 9 finden also die erste Gärungsstufe und die Pausteurisierung gleichzeitig statt.

Aus dem Wärmetauscher 6 gelangt der Rohschlamm über die Rohrleitung 7 und das Ventil 8 in den sogenannten Schlaufenreaktor 9. Dieser Schlaufenreaktor besteht aus mehreren Kanälen, die mit 10 bzw. 11 bezeichnet sind. In dem Kanal 10 wird der Schlamm entsprechend Pfeilrichtung abwärts transportiert, am Ende dieses vertikal stehenden Reaktors nach außen umgelenkt und gelangt dann durch die Rückführungskanäle 11 in die Abflußleitung 12.

Um einen kontinuierlichen Durchlauf des Schlammes durch den Schlaufenreaktor 9 mit seinen mehreren Kanälen zu gewährleisten, ist in der Mitte des Reaktors ein Axialrad 13 angeordnet, welches dem Rohschlamm eine Bewegungskomponente in axialer Richtung aufzwingt. Wegen der Zwangsströmung ist zumindest das einmalige Durchströmen des Behälters gewährleistet. Die Geometrie dieses Behälters gewährleistet eine Verweilzeit des Klärschlammes, um bezüglich der Zeit auf jeden Fall die Pasteurisierungsverhältnisse zu gewährleisten. Damit ist der Schlamm in diesem Behälter dann also einwandfrei entseucht.

Der Behälter 9 wird deshalb als Schlaufenreaktor bezeichnet, weil sich darin gemäß den gestrichelten Pfeilrichtungen eine schlaufenförmige Strömung ausbildet, und zwar dann, wenn ein Teil des Schlammes, der den Behälter bereits durchlaufen hat, eintrittsseitig statt durch die Abflußleitung 12 abzufließen, noch einmal die Kanäle 10 und 9 durchströmt, so daß dann also eine schlaufenförmige Strömung entsteht.

Die durchschrittliche Verweilzeit im Schlaufenreaktor 9 beträgt 12 bis 24 Stunden. Während dieser Zeit läuft die saure Phase der Gärung, die sogenannte Hydrolisierung, bei einem ph-Wert von 5,2 bis 5,4 ab, die durch den thermischen Aufschluß des Rohschlammes spontan einsetzt und gegenüber der konventionellen Faulung zu einer erheblichen Verkürzung der Faulzeit führt.

Das im Schlaufenrohr 9 anfallende Gas wird in der den Reaktor abdeckenden Glocke 14 aufgefangen und dann durch die Gasleitung 15 dem (nicht dargestellten) Gasbehälter zugeführt.

Der Schlamm, der den Schlaufenreaktor 9 verläßt, hat dann eine niedrigere Temperatur als im Wärmetauscher 6. Mit Hilfe der Rohrleitung 12 gelangt er in einen zweiten Wärmetauscher 16, in welchem er auf eine Faultemperatur von ca. 38 $^{o}$C rückgekühlt wird. Von diesem Wärmetauscher 16 gelangt der Schlamm dann mit einer Temperatur von 38 °C durch die Rohrleitung 17 in den Faulbehälter 18, der ebenfalls gegenläufige Strömungskanäle besitzt. Der Kanal, in welchem der Schlamm mit Hilfe des Axialrades 19 vertikal abwärts geführt wird, wird mit 20 bezeichnet, und die aufwärts führenden Kanäle tragen das Bezugszeichen 21. Über die Leitung 22 wird der ausgefaulte Schlamm dann abgeführt.

Der Faulbehälter 18 ist ebenfalls als sogenannter Schlaufenreaktor ausgebildet und funktioniert im Prinzip genau so wie der Schlaufenreaktor 9. Er hat auch eine Gasglocke 23, an welcher das bei der zweiten Stufe des Faulprozesses anfallende Faulgas durch die Leitung 24 abgeführt wird. Die Leitungen 15 und 24 werden dann als Sammelleitung 25 zum gemeinsamen (nicht dargestellten) Gasbehälter geführt.

Die Wärmetauscher 6,16 werden heiz- bzw. kühlwasserseitig in einem geschlossenen Gegenstromkreis 26 betrieben. Die Verlustwärme wird über einen Heizkessel 27 dem Heizmedium, meist Wasser, zugeführt.

Im Schlaufenbehälter 18, der der eigentliche Faulbehälter ist, läuft die alkanische Phase der Gärung bei einem ph-Wert von ca. 7,4 ab.

Wenn man die Volumina des Schlaufenbehälters 9 und 18 in Verhältnis zueinander setzt setzt, beträgt dieses etwa 1 : 8 - 10.

In dem in der Zeichnung dargestellten Ausführungsbeispiel sind die beiden Schlaufenreaktoren 9,18 stehend angeordnet. Das ist jedoch nicht erforderlich, sondern diese Reaktoren können auch ohne weiteres horizontal liegend angeordnet sein.

Beim geschlossenen Heiz- und Kühlkreislauf treten etwa folgende Temperaturen auf: Das Wasser wird mit etwa 90 °C über die Leitung 28 dem Wärmetauscher 6 zugeführt, gelangt durch die Leitung 29 mit etwa 25 $^{O}$C in den Wärmetauscher 16, wo die Temperatur auf etwa 60 $^{O}$C ansteigt, so daß diese dann nach Durchfluß durch die Leitung 29 im Heizkessel 27 wieder auf etwa 90 $^{O}$C angehoben werden muß.

Eine besonders intensive Durchmischung des Klärschlamms erfolgt in den beiden Gärungsstufen jeweils durch das Axialrad 13 bzw. 19. Eine weitere Durchmischung findet an den Umlenkstellen des Klärschlamms statt, und zwar sowohl in den Schlaufenbehältern 9 und 18 als auch in den Umlenkstellen der Rohrleitungen. Diese gute Durchmischung führt dazu, daß der gesamte Klärschlamm für die Bakterien wesentlich besser zugänglich ist, weil dabei umfangreiche Umwälzungen stattfinden, so daß der Schlamm für die Bakterien besser zugänglich ist.

-8-

Patentansprüche:

1. Verfahren zum Behandeln von Klärschlamm, wobei der Rohschlamm pasteurisiert und einem Faulprozeß unterworfen wird,
dadurch gekennzeichnet,
daß die Gärung des Klärschlammes zweistufig erfolgt, wobei die erste Stufe als thermophile, überwiegend saure Gärung mit gleichzeitiger Pasteurisierung und die zweite Stufe als mesophile, überwiegend alkalische Gärung durchgeführt wird und der Klärschlamm in jeder Gärungsstufe durchgemischt und entsprechend der für die Prozesse jeweils erforderlichen Zeit zwangsgeführt wird.

2. Verfahren nach Anspruch 1,
dadurch gekennzeichnet,
daß die erste Gärungsstufe oberhalb 45 $^{\circ}$C und die zweite Stufe zwischen 20 und 45 $^{\circ}$C durchgeführt wird.

3. Verfahren nach Anspruch 2,
dadurch gekennzeichnet,
daß die erste Stufe der Gärung bei einer Temperatur zwischen 55 und 70 $^{\circ}$C durchgeführt wird.

4. Verfahren nach Anspruch 2,
dadurch gekennzeichnet,
daß die erste Stufe der Gärung als sogenannte Hydrolisierung bei einem ph-Wert von 5,2 bis 5,4 durchgeführt wird.

5. Verfahren nach Anspruch 1,

dadurch gekennzeichnet,

daß die Verweilzeit für die erste Stufe der Gärung
zwischen 12 und 24 Stunden beträgt.

6. Verfahren nach Anspruch 1,

dadurch gekennzeichnet,

daß die erste Stufe der Gärung und die Pasteurisierung
des Schlammes in demselben Behälter durchgeführt werden.

7. Verfahren nach Anspruch 1,

dadurch gekennzeichnet,

daß bei der ersten Gärungsstufe der Schlamm mittig in
den Schlaufenreaktor (9) einströmt und diesem eine zusätzliche axiale Strömungskomponente aufgezwungen wird.

8. Verfahren nach Anspruch 1 und 2,

dadurch gekennzeichnet,

daß der Schlamm vor der zweiten Gärungsstufe auf 38 $^{o}$C
rückgekühlt wird.

9. Verfahren nach Anspruch 1,

dadurch gekennzeichnet,

daß die Verweilzeit für die zweite Gärungsstufe 8 bis 10
Tage beträgt.

10. Verfahren nach Anspruch 1,

dadurch gekennzeichnet,

daß die zweite Stufe der Gärung bei einem ph-Wert von
etwa 7,4 durchgeführt wird.

11. Verfahren nach Anspruch 1,

dadurch gekennzeichnet,

daß bei der zweiten Gärungsstufe der Schlamm mittig in
den Schlaufenbehälter einströmt und diesem eine zusätzliche axiale Strömungskomponente aufgezwungen wird.

12. Verfahren nach Anspruch 1,
    dadurch gekennzeichnet,
    daß der Wärmetauscher (6) und der Wärmetauscher (16)
    zum Aufheizen bzw. Rückkühlen des Schlammes mit einem
    geschlossenen Gegenstromkreis (26) betrieben werden,
    wobei die Verlustwärme durch Wärmezufuhr ausgeglichen
    wird.

13. Verfahren nach Anspruch 1,
    dadurch gekennzeichnet,
    daß das Durchmischen des Klärschlammes insbesondere mit
    einem Axialrad (13 bzw. 19) durchgeführt wird.

14. Verfahren nach einem der vorhergehenden Ansprüche,
    dadurch gekennzeichnet,
    daß das Durchmischen des Klärschlammes und das Erzeugen
    der zusätzlichen axialen Geschwindigkeitskomponente für
    den Klärschlamm in beiden Gärungsstufen jeweils mit demselben Axialrad (13 bzw. 19) erfolgen.

15. Vorrichtung zum Behandeln von Klärschlamm, bestehend aus
    einem Pasteurisierungs- und einem Faulraum,
    dadurch gekennzeichnet,
    daß der Pasteurisierungsraum (9) auch der Raum für die
    Durchführung der thermophilen Ausfaulung ist und im
    Faulraum (18) nur die mesophile Ausfaulung stattfindet.

16. Vorrichtung nach Anspruch 15,
    dadurch gekennzeichnet,
    daß die Durchlaufzeit des Schlammes durch den Schlaufenbehälter (9) mindestens der Verweilzeit für die Pasteurisierung entspricht.

17. Vorrichtung nach Anspruch 15,
    dadurch gekennzeichnet,
    daß der Pasteurisierungsraum als Schlaufenreaktor (9)
    ausgebildet ist.

18. Vorrichtung nach Anspruch 17,

dadurch gekennzeichnet,

daß der Schlaufenreaktor (9) senkrechtstehend oder liegend angeordnet ist.

19. Vorrichtung nach Anspruch 15,

dadurch gekennzeichnet,

daß der eingangsseitige Bereich des Schlaufenreaktors (9) ein Axialrad (13) aufweist, welches dem ankommenden Schlamm eine axiale Geschwindigkeitskompoente aufzwingt.

20. Vorrichtung nach Anspruch 17,

dadurch gekennzeichnet,

daß der Schlaufenreaktor (9) einen Strömungsweg aufweist, der so lang ist, daß der Klärschlamm den Reaktor durchschnittlich in 10 bis 12 Stunden durchläuft.

21. Vorrichtung nach Anspruch 15,

dadurch gekennzeichnet,

daß dem Schlaufenreaktor (9) ein Wärmetauscher (6,16) vor bzw. nachgeschaltet ist, wobei der erste Wärmetauscher (6) den Schlamm erhitzt und der zweite Wärmetauscher (16) den Schlamm auf Faultemperatur für die mesophile Ausfaulung rückkühlt.

22. Vorrichtung nach Anspruch 21,

dadurch gekennzeichnet,

daß der Faulraum als Schlaufenreaktor (18) mit einem Axialrad (19) ausgebildet ist, welches im mittleren Bereich des Schlaufenreaktors (18) angeordnet ist und dem ankommenden Schlamm eine axiale Geschwindigkeitskomponente aufzwingt.

23. Vorrichtung nach irgendeinem der vorhergehenden Ansprüche, dadurch gekennzeichnet,

daß der Schlaufenreaktor (9) und der Schlaufenreaktor (18) ein Volumenverhältnis von etwa 1 zu 8 bis 10 aufweisen.

24. Vorrichtung nach irgendeinem der vorhergehenden Ansprüche,
dadurch gekennzeichnet,
daß die Schlaufenreaktoren (9,18) gegenläufige Strömungskanäle (10,11;20,21) aufweisen.

25. Vorrichtung nach einem der vorhergehenden Ansprüche,
dadurch gekennzeichnet,
daß der Schlamm im Schlaufenreaktor (18) in den inneren
Kanal (20) einströmt und im äußeren Kanal (21) rückströmt.

26. Vorrichtung nach Anspruch 25,
dadurch gekennzeichnet,
daß das Axialrad (19) in der Mitte des Schlaufenreaktors
(19) angeordnet ist.

27. Vorrichtung nach irgendeinem der vorhergehenden Ansprüche,
dadurch gekennzeichnet,
daß die Schlaufenbehälter (9,18) für das Axialrad (13,19)
jeweils einen düsenförmigen Leitapparat aufweisen, der im
Bereich des Axialrades (13,19) seinen engsten Querschnitt
hat.

28. Vorrichtung nach einem der vorhergehenden Ansprüche,
dadurch gekennzeichnet,
daß das Zuführungsrohr (7,17) für den Schlamm in den
Leitapparat führt.

1/1

0078919

Europäisches
Patentamt

**0078919**
Nummer der Anmeldung

EUROPÄISCHER RECHERCHENBERICHT

EP 82 10 9267

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 02 F 3/28 |
| X | GB-A-1 597 395 (UNION CARBIDE)<br><br>* Seite 15, Zeilen 9-45; Seite 19, Beispiel I; Seite 9, Zeilen 63-65 * | 1-3,5, 6,8,9, 12,15, 21 | |
| X | DE-C- 907 280 (L. VON ROLL)<br><br>* Seite 2, Zeilen 13-21, 47-78 * | 1,7,11 ,13,14 ,18,19 ,22,24 -26 | |
| A | DE-A-2 621 524 (HITACHI)<br>* Seite 5, Zeilen 8-15; Seite 7, Zeilen 16-19; Seite 8, Zeilen 12-15; Seite 13, Zeile 11 * | 1,4,10 | |
| A | GB-A-2 047 223 (THE AGENCY OF INDUSTRIAL SCIENCE)<br>* Seite 2, Zeile 127 - Seite 3, Zeile 76 * | 1-4,10 | RECHERCHIERTE SACHGEBIETE (Int. Cl. ³)<br><br>C 02 F<br>C 12 M |
| A | EP-A-0 007 489 (H. BLENKE)<br><br>* Figuren 17,7 *<br><br>----- | | |

Der vorliegende Recherchenbericht wurde für alle Patentansprüche erstellt.

| Recherchenort<br>DEN HAAG | Abschlußdatum der Recherche<br>14-02-1983 | Prüfer<br>TEPLY J. |
|---|---|---|